# EUROPEAN PATENT APPLICATION

(11) **EP 4 604 235 A1**
(43) Date of publication of application: **20.08.2025**
(21) Application number: 24883551.4
(22) Date of filing: 29.02.2024
(51) Int. Cl.: H01M 10/04

(54) **INSULATING BOOT MOUNTING SYSTEM AND USAGE METHOD THEREFOR, AND BATTERY PACK PRODUCTION METHOD**

(30) Priority: 04.12.2023 CN 202311641892
(71) Applicant: Contemporary Amperex Technology Co., Limited, Jiaocheng District Ningde Fujian 352100 (CN)
(72) Inventor: YANG, Jun, Ningde Fujian 352100 (CN); ZHANG, Chenlong, Ningde Fujian 352100 (CN); CHEN, Wentao, Ningde Fujian 352100 (CN)
(74) Representative: Ran, Handong
(86) International application number: PCT/CN2024/079414
(87) International publication number: WO 2025/118416

(57) **Abstract**

The present application discloses an insulating cover installation system and a use method thereof, and a production method for a battery pack. The insulating cover installation system includes a machine frame, a material loading assembly, a peeling assembly, a positioning assembly, a driving assembly, and a control module, where the material loading assembly has a material placement position for placing an insulating cover; the driving assembly includes a conveying mechanism, a moving mechanism, and a suction and transfer mechanism, where the conveying mechanism is configured to convey the battery to an attachment station; the moving mechanism is configured to suction the insulating cover from the material placement position to the peeling assembly, the peeling assembly is configured to cooperate with the moving mechanism to peel the release paper from the insulating cover, and the moving mechanism is configured to suction the insulating cover with the release paper peeled off to the positioning assembly; and the suction and transfer mechanism is configured to suction and transfer the insulating cover on the positioning assembly to the attachment station to attach the insulating cover to the battery located at the attachment station. The technical solution of the present application can improve the installation efficiency of insulating covers.

## Description

### CROSS-REFERENCE TO RELATED APPLICATIONS

The present application claims priority to Chinese Patent Application No. 202311641892.9, filed on December 4, 2023, the contents of which are incorporated by reference in their entirety in the present application.

### TECHNICAL FIELD

The present disclosure relates to the field of automated assembly technology, and in particular to an insulating cover installation system and a use method thereof, and a production method for a battery pack.

### BACKGROUND

A battery is a critical component of a battery pack. The battery is formed by stacking and serially connecting multiple battery cells. It is necessary to adhesively install different components on battery cells at different positions. To protect their adhesiveness, these components to be adhered need to be covered with release paper on their adhesive surfaces, which is peeled off only during installation of the components. For example, before stacking and serially connecting battery cells to form a battery, it is necessary to adhesively install insulating covers on the first and last battery cells to prevent problems such as short circuits or leakage during battery operation.

In related art, workers manually peel the release paper from the insulating covers, then suspend and fix the insulating covers in mid-air, after which mechanical arms grasp the insulating covers and attach them to the corresponding batteries. This manual peeling method is inefficient and adversely impacts the installation efficiency of the insulating covers.

### SUMMARY OF THE INVENTION

In view of the above problems, the present application provides an insulating cover installation system, which is intended to improve the installation efficiency of the insulating cover.

The present application provides an insulating cover installation system for installing an insulating cover on a battery, the insulating cover installation system including a machine frame, a material loading assembly, a peeling assembly, a positioning assembly, a driving assembly, and a control module, where
the material loading assembly is disposed on the machine frame and has a material placement position for placing an insulating cover; the peeling assembly is disposed on the machine frame and configured to peel release paper from the insulating cover; the positioning assembly is disposed on the machine frame and configured to position the insulating cover; and the driving assembly includes a conveying mechanism, a moving mechanism, and a suction and transfer mechanism, where the conveying mechanism is configured to convey the battery to an attachment station; the moving mechanism is configured to suction the insulating cover from the material placement position to the peeling assembly, the peeling assembly is configured to cooperate with the moving mechanism to peel the release paper from the insulating cover, and the moving mechanism is configured to suction the insulating cover with the release paper peeled off to the positioning assembly; and the suction and transfer mechanism is configured to suction and transfer the insulating cover on the positioning assembly to the attachment station to attach the insulating cover to the battery located at the attachment station.

In the technical solutions of the embodiments of the present application, an insulating cover is first placed at the material placement position of the material loading assembly manually or mechanically; subsequently, the moving mechanism of the driving assembly suctions the insulating cover from the material placement position to the peeling assembly, enabling the peeling assembly to cooperate with the moving mechanism to automatically peel release paper from the insulating cover; following this, the moving mechanism of the driving assembly suctions the insulating cover with the release paper peeled off to the positioning assembly, allowing the positioning assembly to perform secondary precise positioning of the insulating cover with the release paper peeled off; thereafter, the conveying mechanism of the driving assembly conveys a battery to the attachment station; following this, the suction and transfer mechanism of the driving assembly suctions and conveys the insulating cover from the positioning assembly to the attachment station, enabling the suction and transfer mechanism to attach the insulating cover to the battery located at the attachment station, so as to complete installation of the insulating cover onto the battery. In this way, automatic peeling of the release paper from the insulating cover and automatic attachment of the insulating cover are achieved, thereby effectively improving the installation efficiency of the insulating cover. Additionally, secondary precise positioning of the insulating cover is achieved, thereby significantly enhancing the installation accuracy of the insulating cover.

In some embodiments, the material loading assembly includes a material bin and a material pushing mechanism, the material bin having the material placement position, and the material pushing mechanism being configured to drive the material bin where the insulating cover is placed to move to a material suction position. With such a design, by using a material pushing mechanism to drive the material bin where the insulating cover is placed to move to the material suction position, the movement distance of the moving mechanism can be reduced, making it easier for the moving mechanism to suction the insulating cover.

In some embodiments, the material loading assembly further includes a first lifting mechanism, the first lifting mechanism being disposed below the material bin and configured to lift the material bin at the material suction position. With such a design, by using the first lifting mechanism to lift the material bin where the insulating cover is placed, the lifting height of the moving mechanism can be reduced, making it more conducive to the moving mechanism capturing the position of the insulating cover so as to smoothly suction the insulating cover.

In some embodiments, the material bin is drawably disposed on the machine frame. With such a design, when material loading is required, the material bin can be pulled out to facilitate the placement of insulating covers. After being fully loaded, the material bin can be pushed back to protect the insulating covers.

In some embodiments, at least two layers of material bins are provided, the at least two layers of material bins being arranged at intervals along the vertical direction. With such a design, a greater number of insulating covers can be placed on the at least two layers of material bins at one time without the need for frequent material loading by the user, thereby improving work efficiency.

In some embodiments, the peeling assembly includes a clamping cylinder and a clamping jaw, the clamping cylinder driving the clamping jaw to clamp the release paper on the insulating cover. With such a design, when the moving mechanism suctions and moves the insulating cover to the peeling assembly, the peeling end of the release paper can extend into the clamping jaw. At this time, the clamping cylinder drives the clamping jaw to clamp the release paper on the insulating cover. After that, the moving mechanism obliquely pulls the insulating cover to peel the release paper off from the insulating cover, thereby achieving automatic peeling of the release paper on the insulating cover.

In some embodiments, a clamping surface of the clamping jaw is serrated. With such a design, when the clamping jaw clamps the release paper on the insulating cover, the friction between the clamping jaw and the release paper can be increased by abutment of the serrated clamping surface against the surface of the release paper, avoiding affecting the peeling effect of the release paper due to relative sliding between the release paper and the clamping jaw during diagonal pulling of the insulating cover by the moving mechanism, thereby enabling the release paper to be smoothly peeled off from the insulating cover.

In some embodiments, the peeling assembly further includes a recycling line, the recycling line being located below the clamping jaw, where the recycling line is configured to recycle the peeled-off release paper. With such a design, after the release paper is completely peeled off from the insulating cover, the clamping jaw can release the release paper so that the release paper falls to the recycling line, thereby achieving automatic recycling of the release paper, eliminating the need for manual recycling of the release paper, which can improve work efficiency.

In some embodiments, the positioning assembly includes a positioning plate and at least two first positioning members, the positioning plate being configured to carry the insulating cover, and the at least two first positioning members being capable of moving toward each other to clamp two opposite short edges of the insulating cover. With such a design, the moving mechanism can suction the insulating cover onto the positioning plate to carry the insulating cover with the positioning plate, and subsequently, the at least two first positioning members move toward each other to clamp two opposite short edges of the insulating cover, thereby achieving central positioning of the insulating cover along its length direction.

In some embodiments, one of long edges of the positioning plate is provided with a reference surface, and the positioning assembly further includes a second positioning member, the second positioning member being located on one side of the reference surface, where the second positioning member is capable of moving toward the reference surface and configured to press a folded edge of the insulating cover against the reference surface. With such a design, when the moving mechanism suctions the insulating cover onto the positioning plate, a folded edge of the insulating cover can be located between the reference surface of the positioning plate and the second positioning member, and after the at least two first positioning members centrally position the insulating cover along its length direction, the second positioning member can move toward the reference surface to push the folded edge of the insulating cover towards the reference surface, ensuring that the folded edge of the insulating cover is tightly pressed against the reference surface such that the folded edge of the insulating cover is sandwiched between the reference surface and the second positioning member, thereby enabling central positioning of the insulating cover along its width direction.

In some embodiments, the conveying mechanism includes a conveying line, an unlocking mechanism, and a shaping mechanism, where the conveying line is disposed on one side of the machine frame and has a tray for placing the battery, the tray being provided with a pressing block for pressing the battery, where the conveying line is configured to convey the tray where the battery is placed to the attachment station; the unlocking mechanism is disposed on the machine frame and configured to pull away the pressing block; and the shaping mechanism is disposed on the machine frame and configured to centrally position the battery. With such a design, the to-be-installed battery is first placed on the tray of the conveying line, so as to convey the tray where the battery is placed from a material loading end to the attachment station through the conveying line; the tray is then lifted or the conveying line is stopped to temporarily retain the tray where the battery is placed at the attachment station; subsequently, the pressing block for pressing the battery is pulled away through the unlocking mechanism to make the battery in an unclamped state on the tray; subsequently, the battery is shaped by the shaping mechanism to centrally position the battery, thereby improving the precision of attaching the insulating cover to the battery.

In some embodiments, the shaping mechanism includes a clamping mechanism and a pressing-down mechanism, where the clamping mechanism is disposed above the conveying line, the clamping mechanism including at least two clamping members, where the at least two clamping members are capable of moving toward each other to clamp two opposite sides of the battery to centrally clamp the battery; and the pressing-down mechanism is disposed above the conveying line, the pressing-down mechanism including a pressing-down member, where the pressing-down member is capable of moving down to press the battery. With such a design, after the pressing block pressing the battery is pulled away by the unlocking mechanism, the at least two clamping members of the clamping structure move toward each other to clamp two opposite sides of the battery to centrally position the battery, and at the same time, the pressing-down members of the pressing-down mechanism move down to press the battery, so as to position the battery in its height direction, thereby ensuring precise positioning of the battery at the attachment position for more accurate attachment of the insulating cover on the battery.

In some embodiments, the conveying mechanism further includes a second lifting mechanism, the second lifting mechanism being disposed below the conveying line and configured to lift the tray where the battery is placed to detach it from the conveying line. With such a design, when the conveying line has conveyed the tray where the battery is placed to the attachment station, the second lifting mechanism can lift the tray where the battery is placed to detach it from the conveying line, thereby temporarily retaining the tray where the battery is placed at the attachment station. At this time, steps such as unlocking, shaping, and attaching can be performed on the battery on the tray, and at the same time, the conveying line does not need to be shut down, so that the conveying line can continue to convey the next tray where a battery is placed, and can also continue to convey the previous battery for which attachment has been completed to the next process, thereby improving work efficiency.

In some embodiments, the moving mechanism includes a first driving member, a second driving member, and a first suction cup, where the first driving member is configured to drive the second driving member to move in a horizontal direction, the second driving member is configured to drive the first suction cup to move upward or downward in a vertical direction, and the first suction cup is configured to suction the insulating cover from the material placement position to the peeling assembly and to move the insulating cover with the release paper peeled off to the positioning assembly. With such a design, the second driving member and the first suction cup can be driven to move in the horizontal direction under the action of the first driving member, and at the same time, the first suction cup can be driven to move upward or downward in the vertical direction under the action of the second driving member, so that the first suction cup can more stably suction the insulating cover from the material placement position to the peeling assembly and can more stably suction the insulating cover with the release paper peeled off to the positioning assembly.

In some embodiments, the moving mechanism further includes an air-blowing block, where an air-blowing port of the air-blowing block is oriented toward a suction surface of the first suction cup. With such a design, when the first suction cup suctions the insulating cover with the release paper peeled off to above the positioning assembly, the first suction cup releases suction force, and at the same time, the air-blowing port of the air-blowing block can blow air towards the suction surface of the first suction cup to detach the insulating cover smoothly from the suction surface of the first suction cup, thereby enabling the insulating cover to smoothly drop onto the positioning assembly.

In some embodiments, the suction and transfer mechanism includes a mechanical arm and a second suction cup, the second suction cup being disposed at a free end of the mechanical arm, where the mechanical arm drives the second suction cup to move, and the second suction cup is configured to suction and transfer the insulating cover from the positioning assembly to the attachment station. With such a design, the second suction cup can be driven to move, flip, move upward or downward, and perform other movements arbitrarily in three-dimensional space under the action of the mechanical arm, so that after the second suction cup suctions the insulating cover, it can carry the insulating cover to move, flip, move upward or downward, and perform other movements arbitrarily in the three-dimensional space, thereby enabling the insulating cover to be more accurately attached to the battery.

In some embodiments, the suction and transfer mechanism further includes a visual positioning component, the visual positioning component having an imaging port oriented toward the battery and being configured to determine a position of the battery. With such a design, after the battery is shaped by the shaping mechanism, the visual positioning component photographs the battery that requires attachment of an insulating cover to determine the position of the battery, so that the mechanical arm can perform positional compensation based on the position of the battery, thereby enabling the insulating cover to be attached to the battery more accurately.

In some embodiments, the suction and transfer mechanism further includes a roller assembly, the roller assembly being disposed at the free end of the mechanical arm, where after the second suction cup attaches the insulating cover to the battery, the roller assembly is configured to roll the insulating cover to adhere the insulating cover tightly to the battery. With such a design, after the insulating cover is attached to the battery by the second suction cup, the mechanical arm drives the roller assembly to move, so that the roller assembly rolls the insulating cover attached to the battery to cause the insulating cover to be completely adhered to the battery, thereby improving the installation effect of the insulating cover.

In some embodiments, the insulating cover installation system further includes a visual inspection assembly, the visual inspection assembly being disposed on the machine frame, where the visual inspection assembly is configured to inspect whether the release paper is peeled off from the insulating cover suctioned by the suction and transfer mechanism. With such a design, the insulating cover at the positioning assembly is first sucked and transferred to the visual inspection assembly by the suction and transfer mechanism, so as to inspect through the visual inspection assembly whether the release paper on the insulating cover is completely peeled off. When it is inspected that the release paper on the insulating cover is completely peeled off, the insulating cover is suctioned and transferred to the attachment station by the suction and transfer mechanism and the insulating cover is then attached to the battery; while when it is inspected that the release paper on the insulating cover is not completely peeled off, the suction and transfer mechanism is controlled to recycle the insulating cover.

In some embodiments, at least two peeling assemblies are provided, the at least two peeling assemblies being arranged at intervals along a conveying direction of the conveying mechanism; at least two positioning assemblies are provided, the at least two positioning assemblies being arranged at intervals along the conveying direction of the conveying mechanism; at least two first suction cups of the moving mechanism are provided, the at least two first suction cups being arranged at intervals along the conveying direction of the conveying mechanism; at least two conveying mechanisms are provided, the at least two conveying mechanisms being arranged side by side; at least two suction and transfer mechanisms are provided, the at least two suction and transfer mechanisms being arranged side by side; and at least two second suction cups of the suction and transfer mechanism are provided, the at least two second suction cups being arranged at intervals on a mechanical arm of the suction and transfer mechanism. With such a design, at least two insulating covers can be suctioned to the peeling assembly by the moving mechanism at one time, and the release paper on the at least two insulating covers can be peeled off by the peeling assembly at one time, and the at least two insulating covers can be positioned by the positioning assembly at one time, and the at least two insulating covers can be suctioned by the suction and transfer mechanism at one time, so as to attach the at least two insulating covers on the batteries on the at least two conveying mechanisms in sequence, thereby further improving the installation efficiency of the insulating covers.

The present application further proposes a use method of the aforementioned insulating cover installation system, where the insulating cover installation system is configured to install an insulating cover on a battery, the insulating cover installation system including a machine frame, a material loading assembly, a peeling assembly, a positioning assembly, and a driving assembly; the use method including:
a material loading step: placing a to-be-installed insulating cover on a material placement position of the material loading assembly;
a first moving step: causing a moving mechanism of the driving assembly to suction the insulating cover from the material placement position to the peeling assembly;
a peeling step: causing the peeling assembly to cooperate with the moving mechanism to peel release paper from the insulating cover;
a second moving step: causing the moving mechanism of the driving assembly to suction the insulating cover with the release paper peeled off to the positioning assembly;
a positioning step: causing the positioning assembly to position the insulating cover with the release paper peeled off;
a material conveying step: causing a conveying mechanism of the driving assembly to convey a to-be-installed battery to an attachment station;
a third moving step: causing a suction and transfer mechanism of the driving assembly to suction and transfer the insulating cover from the positioning assembly to the attachment station; and
an attaching step: causing the suction and transfer mechanism to attach the insulating cover to the battery located at the attachment station.

In the technical solutions of the embodiments of the present application, the material loading step is first performed to place an insulating cover at the material placement position of the material loading assembly manually or mechanically; subsequently, the first moving step is performed to suction the insulating cover from the material placement position to the peeling assembly by the moving mechanism of the driving assembly, followed by the peeling step to enable the peeling assembly to cooperate with the moving mechanism to automatically peel release paper from the insulating cover; following this, the second moving step is performed to suction the insulating cover with the release paper peeled off to the positioning assembly by the moving mechanism of the driving assembly, followed by the positioning step to allow the positioning assembly to perform secondary precise positioning of the insulating cover with the release paper peeled off; thereafter, the material conveying step is performed to convey a battery to the attachment station by the conveying mechanism of the driving assembly; following this, the third moving step is performed to suction and convey the insulating cover from the positioning assembly to the attachment station by the suction and transfer mechanism of the driving assembly, followed by the attaching step to enable the suction and transfer mechanism to attach the insulating cover to the battery located at the attachment station, so as to complete installation of the insulating cover to the battery. **In** this way, automatic peeling of the release paper from the insulating cover and automatic attachment of the insulating cover are achieved, thereby effectively improving the installation efficiency of the insulating cover. Additionally, secondary precise positioning of the insulating cover is achieved, thereby significantly enhancing the installation accuracy of the insulating cover.

In some embodiments, before the first moving step, the use method further includes:
a material pushing step: causing a material pushing mechanism of the material loading assembly to move a material bin where the insulating cover is placed to a material suction position; and
a first lifting step: causing a first lifting mechanism of the material loading assembly to lift the material bin at the material suction position.

With such a design, the material pushing step is performed to drive the material bin where the insulating cover is placed to move to the material suction position through the material pushing mechanism, so that the movement distance of the moving mechanism can be reduced, making it easier for the moving mechanism to suction the insulating cover; following this, the first lifting step is performed to lift the material bin where the insulating cover is placed through the first lifting mechanism, so that the lifting height of the moving mechanism can be reduced, making it more conducive to the moving mechanism capturing the position of the insulating cover so as to smoothly suction the insulating cover.

In some embodiments, before the third moving step, the use method further includes:
an unlocking step: causing an unlocking mechanism of the conveying mechanism to pull away a pressing block pressing the battery; and
a shaping step: causing a shaping mechanism of the conveying mechanism to centrally position the battery.

With such a design, the to-be-installed battery is first placed on the tray of the conveying line, so as to convey the tray where the battery is placed from a material loading end to the attachment station through the conveying line; the tray is then lifted or the conveying line is stopped to temporarily retain the tray where the battery is placed at the attachment station; subsequently, the unlocking step is performed to pull away the pressing block for pressing the battery through the unlocking mechanism to make the battery in an unclamped state on the tray; subsequently, the shaping step is performed to shape the battery by the shaping mechanism to centrally position the battery, thereby improving the precision of attaching the insulating cover to the battery.

In some embodiments, before the unlocking step, the use method further includes:
a second lifting step: causing a second lifting mechanism of the conveying mechanism to lift a tray where the battery is placed to detach it from a conveying line of the conveying mechanism.

With such a design, when the conveying line has conveyed the tray where the battery is placed to the attachment station, the second lifting step can be performed to lift the tray where the battery is placed to detach it from the conveying line through the second lifting mechanism, thereby temporarily retaining the tray where the battery is placed at the attachment station. At this time, steps such as unlocking, shaping, and attaching can be performed on the battery on the tray, and at the same time, the conveying line does not need to be shut down, so that the conveying line can continue to convey the next tray where a battery is placed, and can also continue to convey the previous battery for which attachment has been completed to the next process, thereby improving work efficiency.

In some embodiments, the insulating cover installation system further includes a visual inspection assembly, and after the shaping step, the use method further includes:
a visual inspection step: causing the visual inspection assembly to inspect whether the release paper is peeled off from the insulating cover suctioned by the suction and transfer mechanism.

With such a design, the insulating cover at the positioning assembly is first sucked and transferred to the visual inspection assembly by the suction and transfer mechanism, and the visual inspection step is performed to inspect through the visual inspection assembly whether the release paper on the insulating cover is completely peeled off. When it is inspected that the release paper on the insulating cover is completely peeled off, the insulating cover is suctioned and transferred to the attachment station by the suction and transfer mechanism and the insulating cover is then attached to the battery; while when it is inspected that the release paper on the insulating cover is not completely peeled off, the suction and transfer mechanism is controlled to recycle the insulating cover.

In some embodiments, before the attaching step, the use method further includes:
a visual positioning step: causing a visual positioning component of the suction and transfer mechanism to determine a position of the battery.

With such a design, after the battery is shaped by the shaping mechanism, the visual positioning step is performed to photograph the battery that requires attachment of an insulating cover through the visual positioning component to determine the position of the battery, so that the mechanical arm can perform positional compensation based on the position of the battery, thereby enabling the insulating cover to be attached to the battery more accurately.

The present application further proposes a production method for a battery pack, where the aforementioned insulating cover installation system is used to install the insulating cover of the battery pack on a battery, the production method including:
producing the battery and the insulating cover of the battery pack;
using the insulating cover installation system to peel release paper from the insulating cover; and
using the insulating cover installation system to install the insulating cover with the release paper peeled off on the battery.

With such a design, a battery and an insulating cover are first produced through production equipment; the insulating cover is then placed at the material placement position in the material bin of the material loading assembly manually or mechanically; subsequently, the moving mechanism of the driving assembly suctions the insulating cover from the material placement position to the peeling assembly, enabling the peeling assembly to cooperate with the moving mechanism to automatically peel release paper from the insulating cover; following this, the moving mechanism of the driving assembly suctions the insulating cover with the release paper peeled off to the positioning assembly, allowing the positioning assembly to perform secondary precise positioning of the insulating cover with the release paper peeled off; thereafter, the conveying mechanism of the driving assembly conveys a battery to the attachment station; following this, the suction and transfer mechanism of the driving assembly suctions and conveys the insulating cover from the positioning assembly to the attachment station, enabling the suction and transfer mechanism to attach the insulating cover to the battery located at the attachment station, so as to complete installation of the insulating cover onto the battery, thereby producing the battery pack. In this way, automatic peeling of the release paper from the insulating cover and automatic attachment of the insulating cover are achieved, thereby effectively improving the installation efficiency of the insulating cover. Additionally, secondary precise positioning of the insulating cover is achieved, thereby significantly enhancing the installation accuracy of the insulating cover.

The above description is only a summary of the technical solutions of the present application. In order to be able to understand the technical means of the present application more clearly, the technical means can be implemented according to the content of the specification. Furthermore, to make other objectives, features and advantages of the present application more comprehensible, specific implementations of the present application are exemplified below.

### BRIEF DESCRIPTION OF DRAWINGS

In order to describe the technical solutions in the embodiments of the present application or in the prior art more clearly, the following briefly describes the accompanying drawings required for describing the embodiments or the prior art. Apparently, the accompanying drawings in the following description show merely some of the embodiments of the present application, and those of ordinary skill in the art may still derive other drawings from the structures illustrated in these accompanying drawings without creative efforts.
Fig. 1 is a schematic structural diagram of an embodiment of an insulating cover installation system of the present application from one perspective;
Fig. 2 is a schematic structural diagram of an embodiment of the insulating cover installation system of the present application from another perspective;
Fig. 3 is a schematic structural diagram of an embodiment of the insulating cover installation system of the present application from yet another perspective;
Fig. 4 is a schematic structural diagram of one part of an embodiment of the insulating cover installation system of the present application;
Fig. 5 is a schematic structural diagram of another part of an embodiment of the insulating cover installation system of the present application;
Fig. 6 is a schematic structural diagram of yet another part of an embodiment of the insulating cover installation system of the present application;
Fig. 7 is a schematic structural diagram of still another part of an embodiment of the insulating cover installation system of the present application;
Fig. 8 is a schematic structural diagram of a further part of an embodiment of the insulating cover installation system of the present application;
Fig. 9 is a flowchart of an embodiment of a use method of the insulating cover installation system of the present application;
Fig. 10 is a flowchart before S20 in an embodiment of the use method of the insulating cover installation system of the present application;
Fig. 11 is a flowchart before S70 in an embodiment of the use method of the insulating cover installation system of the present application; and
Fig. 12 is a flowchart of an embodiment of a production method for a battery pack of the present application.

### Description of reference numerals:

| Reference numerals | Name | Reference numerals | Name |
|---|---|---|---|
| 100 | Insulating cover installation system | 512 | Unlocking mechanism |
| 10 | Machine frame | 513 | Shaping mechanism |
| 20 | Material loading assembly | 5131 | Clamping mechanism |
| 21 | Material bin | 5131a | Clamping member |
| 30 | Peeling assembly | 5132 | Pressing-down mechanism |
| 31 | Clamping cylinder | 5132a | Pressing-down member |
| 32 | Clamping jaw | 52 | Moving mechanism |
| 321 | Clamping surface | 521 | First driving member |
| 33 | Recycling line | 522 | Second driving member |
| 331 | Recycling bin | 523 | First suction cup |
| 40 | Positioning assembly | 524 | Air-blowing block |
| 41 | Positioning plate | 53 | Suction and transfer mechanism |
| 411 | Reference surface | 531 | Mechanical arm |
| 42 | First positioning member | 532 | Second suction cup |
| 43 | Second positioning member | 533 | Roller assembly |
| 50 | Driving assembly | 534 | Visual positioning component |
| 51 | Conveying mechanism | 60 | Visual inspection assembly |
| 511 | Conveying line | 200 | Insulating cover |
| 5111 | Tray | 210 | Folded edge |
| 5112 | Pressing block | 300 | Battery |

The implementation of the objective, functional features and advantages of the present application will be further described in combination with embodiments and with reference to the accompanying drawings.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. Those skilled in the art understand, both explicitly and implicitly, that the embodiments described herein may be combined with other embodiments.

In the descriptions of the embodiments of the present application, the term "multiple" refers to more than two, and similarly, "multiple groups" refers to more than two groups; and "multiple pieces" refers to more than two pieces.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that apparatuses or components indicated must have particular orientations, and be constructed and operated in the particular orientations, so that these terms are not construed as limiting the embodiments of the present application.

In the description of the embodiments of the present application, unless otherwise expressly specified and limited, the technical terms "mount", "join", "connect", "fix", and the like, should be understood in a broad sense, for example, which may be a fixed connection, a detachable connection, or an integral connection; a mechanical connection, or an electrical connection; a direct connection, an indirect connection through an intermediate medium, an internal communication of two components, or interaction between two components. For those of ordinary skill in the art, the specific meanings of the aforementioned terms in the embodiments of the present application can be understood according to specific situations.

Batteries mentioned in this field can be categorized into disposable batteries and rechargeable batteries according to whether they are rechargeable or not. The common types of rechargeable batteries available today are: lead-acid batteries, nickel-metal hydride batteries, and lithium-ion batteries. Lithium-ion batteries are now widely used in pure electric vehicles and hybrid vehicles. Lithium-ion batteries used for this purpose have a relatively slightly lower capacity, but have a larger output, charging current, and a longer service life, but at a higher cost.

The battery described in the embodiments of the present application refers to a rechargeable battery. Hereinafter, the embodiments disclosed in the present application will be described primarily in terms of a lithium-ion battery as an example. It should be understood that the embodiments disclosed in the present application are applicable to any other suitable type of rechargeable battery. The battery referred to in the embodiments disclosed in the present application may be directly or indirectly applied in an appropriate apparatus to power the apparatus.

The battery referred to in the embodiments disclosed in the present application refers to a single physical module including one or more battery cells to provide a predetermined voltage and capacity. Battery cells are the fundamental units of a battery and can generally be categorized by packaging type into: cylindrical battery cells, rectangular battery cells, and pouch battery cells. The following description will primarily focus on rectangular battery cells. It should be understood that the embodiments described below are also applicable in certain aspects to cylindrical battery cells or pouch battery cells.

A battery cell includes a positive electrode plate, a negative electrode plate, an electrolyte solution, and a separator. A Li-ion battery cell primarily operates by relying on the movement of lithium ions between the positive electrode plate and negative electrode plate. **In** cylindrical battery cells, a three-layer film structure is wound into a cylindrical-shaped electrode assembly, whereas in rectangular battery cells, the film structure is wound or stacked into an electrode assembly with a generally cuboid shape.

In typical battery cell structures, a battery cell includes a case, an electrode assembly, and an electrolyte solution. The electrode assembly is housed within the case of the battery cell and the electrode assembly includes a positive electrode plate, a negative electrode plate, and a separator. The case includes a case base and an end cover. The case base includes an accommodating cavity formed by multiple walls and an opening. The end cover is arranged at the opening to close the accommodating cavity. In addition to the electrode assembly, the accommodating cavity also contains the electrolyte solution. The positive electrode plate and the negative electrode plate in the electrode assembly include tabs. In order to avoid fusing when a large current passes, there are a plurality of positive tabs which are stacked together, and there are a plurality of negative tabs which are stacked together. The tabs are electrically connected to electrode terminals located outside the battery cell through connecting members. The electrode terminals generally include a positive electrode terminal and a negative electrode terminal. For rectangular battery cells, the electrode terminals are generally provided at the end cover portions. The plurality of battery cells may be connected in series and/or in parallel via electrode terminals to be used in various applications.

In high-power application scenarios such as electric vehicles, the application of batteries involves three levels: battery cells, battery cell modules, and batteries. A battery cell module is formed by electrically connecting a certain number of battery cells together and placing them into a frame to protect the battery cells from external impacts, heat, vibration, etc. A battery refers to the final state of the battery system installed in an electric vehicle. The battery generally includes a box body for enclosing one or more battery cells.

A battery is a critical component of a battery pack. The battery is formed by stacking and serially connecting multiple battery cells. It is necessary to adhesively install different components on battery cells at different positions. To protect their adhesiveness, these components to be adhered need to be covered with release paper on their adhesive surfaces, which is peeled off only during installation of the components. For example, before stacking and serially connecting battery cells to form a battery, it is necessary to adhesively install insulating covers on the first and last battery cells to prevent problems such as short circuits or leakage during battery operation.

In related art, workers manually peel the release paper from the insulating covers, then suspend and fix the insulating covers in mid-air, after which mechanical arms grasp the insulating covers and attach them to the corresponding batteries. This manual peeling method is inefficient and adversely impacts the installation efficiency of the insulating covers.

To address the aforementioned issues, the present solution proposes an insulating cover installation system capable of automatically peeling release paper from an insulating cover and automatically attaching the insulating cover, eliminating manual peeling and significantly improving installation efficiency.

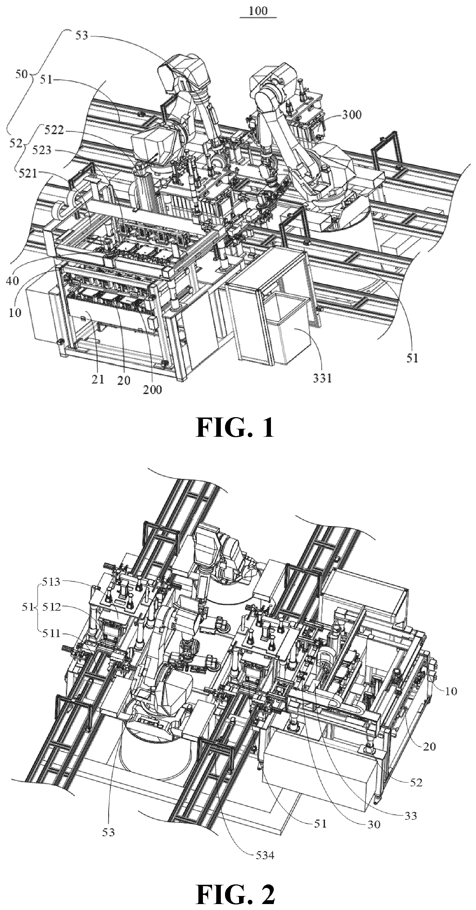

With reference to Figs. 1 to 8, the present application provides an insulating cover installation system 100 for installing an insulating cover 200 on a battery 300, the insulating cover installation system 100 including a machine frame 10, a material loading assembly 20, a peeling assembly 30, a positioning assembly 40, a driving assembly 50, and a control module, where
the material loading assembly 20 is disposed on the machine frame 10 and has a material placement position for placing an insulating cover 200; the peeling assembly 30 is disposed on the machine frame 10 and configured to peel release paper from the insulating cover 200; the positioning assembly 40 is disposed on the machine frame 10 and configured to position the insulating cover 200; and the driving assembly 50 includes a conveying mechanism 51, a moving mechanism 52, and a suction and transfer mechanism 53, where the conveying mechanism 51 is configured to convey the battery 300 to an attachment station; the moving mechanism 52 is configured to suction the insulating cover 200 from the material placement position to the peeling assembly 30, the peeling assembly 30 is configured to cooperate with the moving mechanism 52 to peel the release paper from the insulating cover 200, and the moving mechanism 52 is configured to suction the insulating cover 200 with the release paper peeled off to the positioning assembly 40; the suction and transfer mechanism 53 is configured to suction and transfer the insulating cover 200 on the positioning assembly 40 to the attachment station to attach the insulating cover 200 to the battery 300 located at the attachment station; and the peeling assembly 30 and the driving assembly 50 are both electrically connected to the control module, and the control module can control movement of the driving assembly 50 and can control the peeling assembly 30 to cooperate with the moving mechanism 52 to peel the release paper from the insulating cover 200.

In some embodiments, the material loading assembly 20 may include a material bin 21, the material bin 21 having a material placement position for placing the insulating cover 200.

During practical applications, the to-be-installed insulating cover 200 can be specifically placed at the material placement position of the material bin 21 manually or mechanically.

Furthermore, one or at least two material placement positions of the material bin 21 can be provided, where each material placement position can hold one or at least two insulating covers 200. In some embodiments, when each material placement position holds at least two insulating covers 200, the at least two insulating covers 200 can be sequentially stacked on the material placement position.

In some embodiments, when at least two insulating covers 200 are sequentially stacked on each material placement position, since the insulating cover 200 is provided with a folded edge 210, in order to ensure that the suctioned surfaces of the stacked at least two insulating covers 200 are located at the same position, an inclined guide slot angled upward can be provided on the base plate of the material bin 21. The angle of the inclined guide slot is determined by the angle formed by the continuous stacking of the folded edges 210 on the insulating covers 200. For example, the angle of the inclined guide slot may be 30°, 45°, 60°, and so on.

During practical applications, the material bin 21 may be installed drawably on the machine frame 10, similar to a drawer-like structure; alternatively, the material bin 21 may be installed on the machine frame 10 via rotation, swinging, or other methods to facilitate placement of the insulating covers 200.

In some embodiments, the material bin 21 may alert the user to place insulating covers 200 by flashing a red light for material shortage alarms.

In some embodiments, the material bin 21 is installed drawably on the machine frame 10, with spring-loaded pins provided on both sides of the material bin 21. The machine frame 10 is equipped with sensors capable of detecting whether the spring-loaded pins are present. When the user pulls out the spring-loaded pins on both sides of the material bin 21, the sensors detect that the spring-loaded pins are disengaged, indicating that material loading can be performed at this time. The user can then pull the material bin 21 outward by gripping the handle of the material bin 21 for manual material loading. After completing the material loading, the user can push the material bin 21 back into position by gripping the handle of the material bin 21 and then insert the spring-loaded pins into both sides of the material bin 21 to complete the material loading of the insulating cover 200.

Further, in order to facilitate sliding the material bin 21, slider-rail matching structures may be provided on both sides of the material bin 21.

It should be noted that the battery 300 conveyed by the conveying mechanism 51 may be a single battery 300 requiring installation of the insulating cover 200 or a battery 300 module formed by stacking and serially connecting multiple batteries 300.

During practical applications, one or at least two conveying mechanisms 51 of the driving assembly 50 may be provided. Specifically, depending on the size of the workspace, a corresponding number of conveying mechanisms 51 may be provided, so as to achieve higher installation efficiency.

Additionally, the moving mechanism 52 can simultaneously suction one or at least two insulating covers 200, which may specifically depend on the actual usage situations.

Additionally, the suction and transfer mechanism 53 can also simultaneously suction and transfer one or at least two insulating covers 200, which may specifically depend on the actual usage situations.

During practical applications, the peeling assembly 30 can cooperate with the moving mechanism 52 to simultaneously peel release paper from one or at least two insulating covers 200, which may specifically depend on the actual usage situations.

In the technical solutions of the embodiments of the present application, an insulating cover 200 is first placed at the material placement position in the material bin 21 of the material loading assembly 20 manually or mechanically; subsequently, the moving mechanism 52 of the driving assembly 50 suctions the insulating cover 200 from the material placement position to the peeling assembly 30, enabling the peeling assembly 30 to cooperate with the moving mechanism 52 to automatically peel release paper from the insulating cover 200; following this, the moving mechanism 52 of the driving assembly 50 suctions the insulating cover 200 with the release paper peeled off to the positioning assembly 40, allowing the positioning assembly 40 to perform secondary precise positioning of the insulating cover 200 with the release paper peeled off; thereafter, the conveying mechanism 51 of the driving assembly 50 conveys a battery 300 to the attachment station; following this, the suction and transfer mechanism 53 of the driving assembly 50 suctions and conveys the insulating cover 200 from the positioning assembly 40 to the attachment station, enabling the suction and transfer mechanism 53 to attach the insulating cover 200 to the battery 300 located at the attachment station, so as to complete installation of the insulating cover 200 onto the battery 300. In this way, automatic peeling of the release paper from the insulating cover 200 and automatic attachment of the insulating cover 200 are achieved, thereby effectively improving the installation efficiency of the insulating cover 200. Additionally, secondary precise positioning of the insulating cover 200 is achieved, thereby significantly enhancing the installation accuracy of the insulating cover 200.

In addition, by installing all of the material loading assembly 20, the peeling assembly 30, the positioning assembly 40, and the moving mechanism 52 of the driving assembly 50 on the machine frame 10, the overall structure of the insulating cover installation system 100 is made more compact, which can effectively reduce the footprint of the equipment and improve the utilization of the entire space.

In addition, the moving mechanism 52 and the suction and transfer mechanism 53 can operate simultaneously. For example, after the moving mechanism 52 suctions the insulating cover 200 with the release paper peeled off to the positioning assembly 40 for secondary precise positioning, the suction and transfer mechanism 53 suctions and transfers the insulating cover 200 from the positioning assembly 40 to the attachment station. Simultaneously, the moving mechanism 52 suctions the next insulating cover 200 to the peeling assembly 30, enabling the peeling assembly 30 to cooperate with the moving mechanism 52 to automatically peel the release paper from the insulating cover 200. This can further improve the installation efficiency of the insulating cover 200.

In an embodiment of the present application, with reference to Figs. 1 to 3, the material loading assembly 20 includes a material bin 21 and a material pushing mechanism, the material bin 21 having the material placement position, and the material pushing mechanism being configured to drive the material bin 21 where the insulating cover 200 is placed to move to a material suction position.

In some embodiments, the material pushing mechanism may be a linear cylinder so that, under the linear motion of the linear cylinder, the material bin 21 is driven to move to the material suction position, or the material bin 21 is driven to return to the material loading position.

In some other embodiments, the material pushing mechanism may also adopt a structure in which a cylinder cooperates with gears and racks or a structure in which a cylinder cooperates with lead screws and nuts, which is not specifically limited herein.

With such a design, by using a material pushing mechanism to drive the material bin 21 where the insulating cover 200 is placed to move to the material suction position, the movement distance of the moving mechanism 52 can be reduced, making it easier for the moving mechanism 52 to suction the insulating cover 200.

In an embodiment of the present application, with combined reference to Figs. 1 to 3, the material loading assembly 20 further includes a first lifting mechanism, the first lifting mechanism being disposed below the material bin 21 and configured to lift the material bin 21 at the material suction position.

In some embodiments, the first lifting mechanism may be a lifting cylinder to lift the material bin 21 under the linear motion of the lifting cylinder.

In some other embodiments, the first lifting mechanism may also adopt a structure in which a cylinder cooperates with gears and racks or a structure in which a cylinder cooperates with lead screws and nuts, which is not specifically limited herein.

With such a design, by using the first lifting mechanism to lift the material bin 21 where the insulating cover 200 is placed, the lifting height of the moving mechanism 52 can be reduced, making it more conducive to the moving mechanism 52 capturing the position of the insulating cover 200 so as to smoothly suction the insulating cover 200.

In an embodiment of the present application, with combined reference to Figs. 1 to 3, the material bin 21 is drawably disposed on the machine frame 10.

In this embodiment, the material bin 21 has a structure similar to a drawer.

During practical applications, the pulling and drawing of the material bin 21 can be realized manually or mechanically.

With such a design, when material loading is required, the material bin 21 can be pulled out to facilitate the placement of the insulating cover 200. After being fully loaded, the material bin 21 can be pushed back to protect the insulating cover 200.

In an embodiment of the present application, with combined reference to Figs. 1 to 3, at least two layers of material bins 21 are provided, the at least two layers of material bins 21 being arranged at intervals along the vertical direction.

During practical applications, each layer of material bin 21 may hold the same number of insulating covers 200 or different numbers of insulating covers 200, which is not specifically limited herein.

With such a design, a greater number of insulating covers 200 can be placed on the at least two layers of material bins 21 at one time without the need for frequent material loading by the user, thereby improving work efficiency.

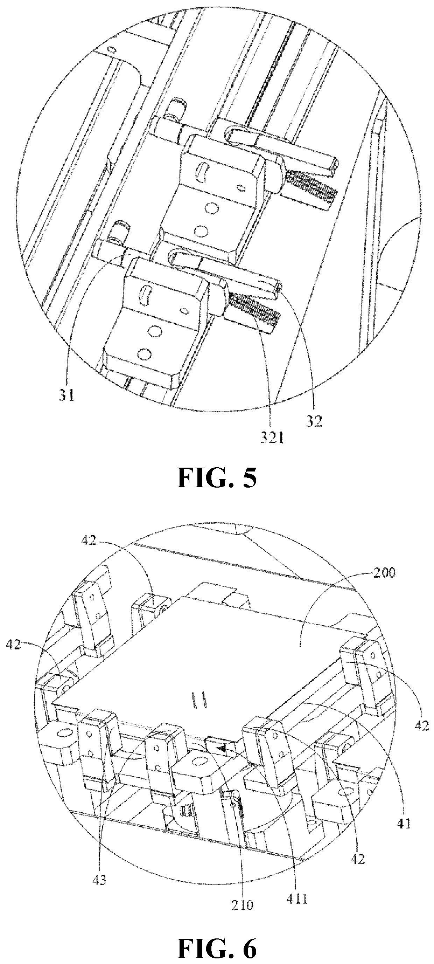

In an embodiment of the present application, with combined reference to Fig. 5, the peeling assembly 30 includes a clamping cylinder 31 and a clamping jaw 32, the clamping cylinder 31 driving the clamping jaw 32 to clamp the release paper on the insulating cover 200.

In some embodiments, the clamping jaw 32 may include a first clamping member 5131a, a second clamping member 513 1a, a rotating shaft, and a torsion spring. The rotating shaft penetrates the first clamping member 5131a and the second clamping member 5131a. The torsion spring is sleeved on the rotating shaft, with the two ends of the torsion spring abutting against the first clamping member 5131a and the second clamping member 5131a, respectively. The clamping cylinder 31 can drive the first clamping member 5131a and/or the second clamping member 5131a to rotate, causing the first clamping member 5131a and the second clamping member 5131a to clamp together, thereby clamping the release paper on the insulating cover 200.

With such a design, when the moving mechanism 52 suctions and moves the insulating cover 200 to the peeling assembly 30, the peeling end of the release paper can extend into the clamping jaw 32. At this time, the clamping cylinder 31 drives the clamping jaw 32 to clamp the release paper on the insulating cover 200. After that, the moving mechanism 52 obliquely pulls the insulating cover 200 to peel the release paper off from the insulating cover 200, thereby achieving automatic peeling of the release paper on the insulating cover 200.

In an embodiment of the present application, with combined reference to Fig. 5, the clamping surface 321 of the clamping jaw 32 is serrated.

In some embodiments, the clamping surfaces 321 of the first clamping member 5131a and the second clamping member 5131a of the clamping jaw 32 may both be serrated to sufficiently increase friction between the clamping jaw 32 and the release paper.

With such a design, when the clamping jaw 32 clamps the release paper on the insulating cover 200, the friction between the clamping jaw 32 and the release paper can be increased by abutment of the serrated clamping surface 321 against the surface of the release paper, avoiding affecting the peeling effect of the release paper due to relative sliding between the release paper and the clamping jaw 32 during diagonal pulling of the insulating cover 200 by the moving mechanism 52, thereby enabling the release paper to be smoothly peeled off from the insulating cover 200.

In an embodiment of the present application, with combined reference to Figs. 1 and 2, the peeling assembly 30 further includes a recycling line 33, the recycling line 33 being located below the clamping jaw 32, where the recycling line 33 is configured to recycle the peeled-off release paper.

In some embodiments, a recycling bin 331 may be provided at the output end of the recycling line 33. The recycling line 33 can convey the release paper to the output end, where it ultimately falls into the recycling box 331 for collection.

With such a design, after the release paper is completely peeled off from the insulating cover 200, the clamping jaw 32 can release the release paper so that the release paper falls to the recycling line 33, thereby achieving automatic recycling of the release paper, eliminating the need for manual recycling of the release paper, which can improve work efficiency.

In an embodiment of the present application, with combined reference to Fig. 6, the positioning assembly 40 includes a positioning plate 41 and at least two first positioning members 42, the positioning plate 41 being configured to carry the insulating cover 200, and the at least two first positioning members 42 being capable of moving toward each other to clamp two opposite short edges of the insulating cover 200.

It should be noted that the plate surface of the positioning plate 41 for carrying the insulating cover 200 is provided with an anti-adhesion layer that can prevent the insulating cover 200 with the release paper peeled off from adhering to the positioning plate 41.

It should be noted that the short edges of the insulating cover 200 refer to two side edges arranged adjacent to the folded edge 210 provided on the insulating cover 200, while the side edge of the insulating cover 200 that is provided with the folded edge 210 and the side edge arranged opposite to the folded edge 210 are the long edges of the insulating cover 200.

During practical applications, either of the short edges of the insulating cover 200 may correspond to one or at least two first positioning members 42. In some embodiments, either of the short edges of the insulating cover 200 may correspond to two first positioning members 42, so that the two first positioning members 42 are arranged at intervals along the extension direction of the short edges of the positioning plate 41, which can enhance the effect of positioning the insulating cover 200.

It should be noted that the short edges of the insulating cover 200 correspond to the short edges of the positioning plate 41, and the long edges of the insulating cover 200 correspond to the long edges of the positioning plate 41.

In some embodiments, in order to avoid damaging the insulating cover 200 during the process of clamping the insulating cover 200, buffer pads may be provided on the sides of the first positioning members 42 that are close to the positioning plate 41. Thus, when clamping the insulating cover 200, the first positioning members 42 contact the insulating cover 200 through the buffer pads to provide the buffering effect.

With such a design, the moving mechanism 52 can suction the insulating cover 200 onto the positioning plate 41 to carry the insulating cover 200 with the positioning plate 41, and subsequently, the at least two first positioning members 42 move toward each other to clamp two opposite short edges of the insulating cover 200, thereby achieving central positioning of the insulating cover 200 along its length direction.

In an embodiment of the present application, with combined reference to Fig. 6, one of long edges of the positioning plate 41 is provided with a reference surface 411, and the positioning assembly 40 further includes a second positioning member 43, the second positioning member 43 being located on one side of the reference surface 411, where the second positioning member 43 is capable of moving toward the reference surface 411 and configured to press a folded edge 210 of the insulating cover 200 against the reference surface 411.

During actual applications, one side of the reference surface 411 may be provided with one or at least two second positioning members 43. In some embodiments, two second positioning members 43 are provided on one side of the reference surface 411, and the two second positioning members 43 are arranged at intervals along the extension direction of the long edges of the positioning plate 41, which can enhance the positioning effect on the insulating cover 200.

In some embodiments, in order to avoid damaging the folded edge 210 of the insulating cover 200 during the process of pressing the folded edge 210 against the reference surface 411, buffer pads may be provided on the sides of the second positioning members 43 that are close to the reference surface 411. Thus, when pressing the folded edge 210 of the insulating cover 200 against the reference surface 411, the second positioning members 43 contact the folded edge 210 of the insulating cover 200 through the buffer pads to provide the buffering effect.

With such a design, when the moving mechanism 52 suctions the insulating cover 200 onto the positioning plate 41, a folded edge 210 of the insulating cover 200 can be located between the reference surface 411 of the positioning plate 41 and the second positioning member 43, and after the at least two first positioning members 42 centrally position the insulating cover 200 along its length direction, the second positioning member 43 can move toward the reference surface 411 to push the folded edge 210 of the insulating cover 200 towards the reference surface 411, ensuring that the folded edge 210 of the insulating cover 200 is tightly pressed against the reference surface 411 such that the folded edge 210 of the insulating cover 200 is sandwiched between the reference surface 411 and the second positioning member 43, thereby enabling central positioning of the insulating cover 200 along its width direction.

In an embodiment of the present application, with combined reference to Figs. 2, 3, and 7, the conveying mechanism 51 includes a conveying line 511, an unlocking mechanism 512, and a shaping mechanism 513, where the conveying line 511 is disposed on one side of the machine frame 10 and has a tray 5111 for placing the battery 300, the tray 5111 being provided with a pressing block 5112 for pressing the battery 300, where the conveying line 511 is configured to convey the tray 5111 where the battery 300 is placed to the attachment station; the unlocking mechanism 512 is disposed on the machine frame 10 and configured to pull away the pressing block 5112; and the shaping mechanism 513 is disposed on the machine frame 10 and configured to centrally position the battery 300.

In some embodiments, a battery 300 module formed by stacking and serially connecting multiple batteries 300 may be placed on the tray 5111. Thus, two pressing blocks 5112 are correspondingly provided on two sides of the first and last batteries 300 in the battery 300 module, respectively, so as to press the battery 300 module through the two pressing blocks 5112, thereby enhancing the stability of the battery 300 module during conveying. Correspondingly, each pressing block 5112 may be correspondingly provided with one unlocking mechanism 512 to pull away the corresponding pressing block 5112 via the unlocking mechanism 512.

In some embodiments, the pressing block 5112 may include an operating portion, an elastic connecting portion, and a pressing portion, where the operating portion and the pressing portion are connected to two opposite ends of the elastic connecting portion, the side of the pressing portion away from the elastic connecting portion is configured to press the battery 300, the unlocking mechanism 512 can drive the operating portion to move toward or away from the battery 300, and when the unlocking mechanism drives the operating portion to move away from the battery 300, the elastic connecting portion and the pressing portion are both driven to move away from the battery 300 to make the battery 300 in an unclamped state on the tray 5111. At the same time, by providing the elastic connecting portion, a buffering effect can be provided when the pressing block 5112 presses the battery 300, preventing damage to the battery 300.

In some embodiments, the unlocking mechanism 512 may include an unlocking cylinder and a movable member, where the unlocking cylinder drives the movable member to move toward or away from the battery 300, and the movable member is at least partially inserted into a side of the operating portion to drive the operating portion to move toward or away from the battery 300.

Further, two unlocking cylinders and two movable members may be provided. Each unlocking cylinder drives one movable member to move toward or away from the battery 300. The two movable members are at least partially inserted into two opposite sides of the operating portion, which allows the pressing block 5112 to be driven more stably under the action of the two unlocking cylinders and the two movable members, enabling smoother pulling of the pressing block 5112.

With such a design, the to-be-installed battery 300 is first placed on the tray 5111 of the conveying line 511, so as to convey the tray 5111 where the battery 300 is placed from a material loading end to the attachment station through the conveying line 511; the tray 5111 is then lifted or the conveying line 511 is stopped to temporarily retain the tray 5111 where the battery 300 is placed at the attachment station; subsequently, the pressing block 5112 for pressing the battery 300 is pulled away through the unlocking mechanism 512 to make the battery 300 in an unclamped state on the tray 5111; subsequently, the battery 300 is shaped by the shaping mechanism 513 to centrally position the battery 300, thereby improving the precision of attaching the insulating cover 200 to the battery 300.

**In** an embodiment of the present application, with combined reference to Figs. 2, 3, and 7, the shaping mechanism 513 includes a clamping mechanism 5131 and a pressing-down mechanism 5132, where the clamping mechanism 5131 is disposed above the conveying line 511, the clamping mechanism 5131 including at least two clamping members 5131a, where the at least two clamping members 5131 a are capable of moving toward each other to clamp two opposite sides of the battery 300 to centrally clamp the battery 300; and the pressing-down mechanism 5132 is disposed above the conveying line 511, the pressing-down mechanism 5132 including a pressing-down member 5132a, where the pressing-down member 5132a is capable of moving down to press the battery 300.

In some embodiments, a battery 300 module formed by stacking and serially connecting multiple batteries 300 may be placed on the tray 5111. Thus, two clamping mechanisms 5131 are correspondingly provided for the first and last batteries 300 in the battery 300 module, respectively, and only the pressing-down member 5132a of one pressing-down mechanism 5132 is required to press down the entire battery 300 module. At least two clamping members 5131a of one clamping mechanism 5131 are configured to clamp the first battery 300 in the battery 300 module, while at least two clamping members 5131 a of the other clamping mechanism 5131 are configured to clamp the last battery 300 in the battery 300 module.

In some embodiments, in order to avoid damaging the battery 300 during the process of the clamping members 5131a clamping the battery 300, buffer pads may be provided on the sides of the clamping members 5131a that are close to the battery 300. Thus, when clamping the battery 300, the clamping members 5131a can contact the battery 300 through the buffer pads to provide the buffering effect.

With such a design, after the pressing block 5112 pressing the battery 300 is pulled away by the unlocking mechanism 512, the at least two clamping members 5131a of the clamping structure move toward each other to clamp two opposite sides of the battery 300 to centrally position the battery 300, and at the same time, the pressing-down members 5132a of the pressing-down mechanism 5132 move down to press the battery 300, so as to position the battery 300 in its height direction, thereby ensuring precise positioning of the battery 300 at the attachment position for more accurate attachment of the insulating cover 200 on the battery 300.

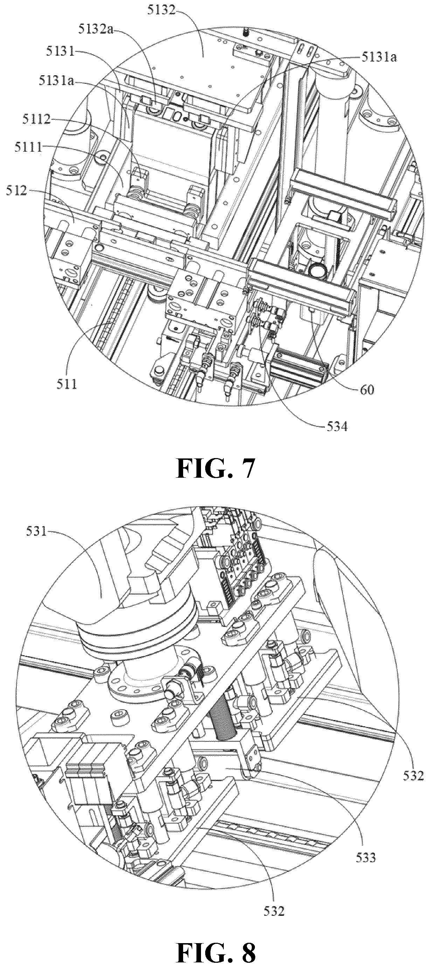

In an embodiment of the present application, with combined reference to Fig. 7, the conveying mechanism 51 further includes a second lifting mechanism, the second lifting mechanism being disposed below the conveying line 511 and configured to lift the tray 5111 where the battery 300 is placed to detach it from the conveying line 511.

In some embodiments, the second lifting mechanism may be a lifting cylinder to lift the tray 5111 under the linear motion of the lifting cylinder.

In some other embodiments, the second lifting mechanism may also adopt a structure in which a cylinder cooperates with gears and racks or a structure in which a cylinder cooperates with lead screws and nuts, which is not specifically limited herein.

With such a design, when the conveying line 511 has conveyed the tray 5111 where the battery 300 is placed to the attachment station, the second lifting mechanism can lift the tray 5111 where the battery 300 is placed to detach it from the conveying line 511, thereby temporarily retaining the tray 5111 where the battery 300 is placed at the attachment station. At this time, steps such as unlocking, shaping, and attaching can be performed on the battery 300 on the tray 5111, and at the same time, the conveying line 511 does not need to be shut down, so that the conveying line 511 can continue to convey the next tray 5111 where a battery 300 is placed, and can also continue to convey the previous battery 300 for which attachment has been completed to the next process, thereby improving work efficiency.

In an embodiment of the present application, with combined reference to Figs. 1 to 4, the moving mechanism 52 includes a first driving member 521, a second driving member 522, and a first suction cup 523, where the first driving member 521 is configured to drive the second driving member 522 to move in a horizontal direction, the second driving member 522 is configured to drive the first suction cup 523 to move upward or downward in a vertical direction, and the first suction cup 523 is configured to suction the insulating cover 200 from the material placement position to the peeling assembly 30 and to move the insulating cover 200 with the release paper peeled off to the positioning assembly 40.

In some embodiments, the first driving member 521 may adopt a structure in which a motor cooperates with a drive pulley, a driven pulley, and a transmission belt. The transmission belt is looped around the drive pulley and the driven pulley. The motor can drive the drive pulley to rotate, causing the transmission belt to rotate under the rotation of the drive pulley, thereby driving the driven pulley to rotate. The second driving member 522 is provided with a connection member, enabling the second driving member 522 to be connected to the transmission belt via the connection member. This allows the rotation of the transmission belt to smoothly drive the second driving member 522 to move in the horizontal direction. Certainly, in other embodiments, the first driving member 521 may also adopt a structure in which a motor cooperates with gears and racks or a structure in which a motor cooperates with lead screws and nuts.

In some embodiments, the second driving member 522 may be a lifting cylinder configured to drive the first suction cup 523 to lift and lower smoothly under the linear motion of the lifting cylinder. Certainly, in other embodiments, the second driving member 522 may also adopt a structure in which a motor cooperates with gears and racks or a structure in which a motor cooperates with lead screws and nuts.

With such a design, the second driving member 522 and the first suction cup 523 can be driven to move in the horizontal direction under the action of the first driving member 521, and at the same time, the first suction cup 523 can be driven to move upward or downward in the vertical direction under the action of the second driving member 522, so that the first suction cup 523 can more stably suction the insulating cover 200 from the material placement position to the peeling assembly 30 and can more stably suction the insulating cover 200 with the release paper peeled off to the positioning assembly 40.

In an embodiment of the present application, with reference to Figs. 1 to 4, the moving mechanism 52 further includes an air-blowing block 524, where an air-blowing port of the air-blowing block 524 is oriented toward a suction surface of the first suction cup 523.

In some embodiments, the air-blowing block 524 may be disposed laterally to the first suction cup 523, where the air-blowing port of the air-blowing block 524 blows air obliquely downward to more effectively blow off the insulating cover 200.

Further, air-blowing blocks 524 may be provided on two opposite sides of the first suction cup 523, so as to simultaneously blow air toward the suction surface of the first suction cup 523 through the air-blowing blocks 524 on both sides of the first suction cup 523, thereby more stably blow off the insulating cover 200.

With such a design, when the first suction cup 523 suctions the insulating cover 200 with the release paper peeled off to above the positioning assembly 40, the first suction cup 523 releases suction force, and at the same time, the air-blowing port of the air-blowing block 524 can blow air towards the suction surface of the first suction cup 523 to detach the insulating cover 200 smoothly from the suction surface of the first suction cup 523, thereby enabling the insulating cover 200 to smoothly drop onto the positioning assembly 40.

In an embodiment of the present application, with combined reference to Fig. 8, the suction and transfer mechanism 53 includes a mechanical arm 531 and a second suction cup 532, the second suction cup 532 being disposed at a free end of the mechanical arm 531, where the mechanical arm 531 drives the second suction cup 532 to move, and the second suction cup 532 is configured to suction and transfer the insulating cover 200 from the positioning assembly 40 to the attachment station.

With such a design, the second suction cup 532 can be driven to move, flip, move upward or downward, and perform other movements arbitrarily in three-dimensional space under the action of the mechanical arm 531, so that after the second suction cup 532 suctions the insulating cover 200, it can carry the insulating cover 200 to move, flip, move upward or downward, and perform other movements arbitrarily in the three-dimensional space, thereby enabling the insulating cover 200 to be more accurately attached to the battery 300.

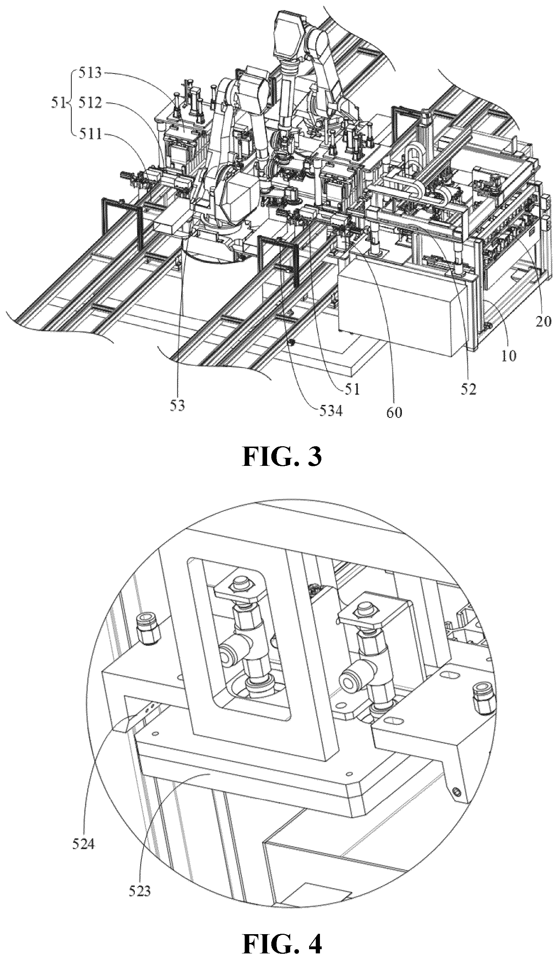

In an embodiment of the present application, with combined reference to Figs. 2 and 3, the suction and transfer mechanism 53 further includes a visual positioning component 534, the visual positioning component 534 having an imaging port oriented toward the battery 300 and being configured to determine a position of the battery 300.

In this embodiment, after the visual positioning component 534 captures the position of the battery 300, the position data may be transmitted to the control module so that the mechanical arm 531 may be controlled by the control module to perform positional compensation according to the position of the battery 300.

With such a design, after the battery 300 is shaped by the shaping mechanism 513, the visual positioning component photographs the battery 300 that requires attachment of an insulating cover 200 to determine the position of the battery 300, so that the mechanical arm 531 can perform positional compensation based on the position of the battery 300, thereby enabling the insulating cover 200 to be attached to the battery 300 more accurately.

In an embodiment of the present application, with combined reference to Fig. 8, the suction and transfer mechanism 53 further includes a roller assembly 533, the roller assembly 533 being disposed at the free end of the mechanical arm 531, where after the second suction cup 532 attaches the insulating cover 200 to the battery 300, the roller assembly 533 is configured to roll the insulating cover 200 to adhere the insulating cover 200 tightly to the battery 300.

In some embodiments, the roller assembly 533 may include a mounting bracket, a mounting shaft, and a roller, where the mounting bracket is connected to the free end of the mechanical arm 531, the mounting shaft is connected to the mounting bracket, the roller is sleeved on the mounting shaft and the roller can rotate relative to the mounting shaft.

In some embodiments, the roller assembly 533 may be disposed on one side of the second suction cup 532 to avoid interference between the roller assembly 533 and the second suction cup 532.

With such a design, after the insulating cover 200 is attached to the battery 300 by the second suction cup 532, the mechanical arm 531 drives the roller assembly 533 to move, so that the roller assembly 533 rolls the insulating cover 200 attached to the battery 300 to cause the insulating cover 200 to be completely adhered to the battery 300, thereby improving the installation effect of the insulating cover 200.

In an embodiment of the present application, with combined reference to Figs. 2, 3, and 7, the insulating cover installation system 100 further includes a visual inspection assembly 60, the visual inspection assembly 60 being disposed on the machine frame 10, where the visual inspection assembly 60 is configured to inspect whether the release paper is peeled off from the insulating cover 200 suctioned by the suction and transfer mechanism 53.

With such a design, the insulating cover 200 at the positioning assembly 40 is first sucked and transferred to the visual inspection assembly 60 by the suction and transfer mechanism 53, so as to inspect through the visual inspection assembly 60 whether the release paper on the insulating cover 200 is completely peeled off. When it is inspected that the release paper on the insulating cover 200 is completely peeled off, the insulating cover 200 is suctioned and transferred to the attachment station by the suction and transfer mechanism 53 and the insulating cover 200 is then attached to the battery 300; while when it is inspected that the release paper on the insulating cover 200 is not completely peeled off, the suction and transfer mechanism 53 is controlled to recycle the insulating cover 200.

In an embodiment of the present application, with combined reference to Figs. 1 to 3, 5, and 8, at least two peeling assemblies 30 are provided, the at least two peeling assemblies 30 being arranged at intervals along a conveying direction of the conveying mechanism 51; at least two positioning assemblies 40 are provided, the at least two positioning assemblies 40 being arranged at intervals along the conveying direction of the conveying mechanism 51; at least two first suction cups 523 of the moving mechanism 52 are provided, the at least two first suction cups 523 being arranged at intervals along the conveying direction of the conveying mechanism 51; at least two conveying mechanisms 51 are provided, the at least two conveying mechanisms 51 being arranged side by side; at least two suction and transfer mechanisms 53 are provided, the at least two suction and transfer mechanisms 53 being arranged side by side; and at least two second suction cups 532 of the suction and transfer mechanism 53 are provided, the at least two second suction cups 532 being arranged at intervals on a mechanical arm 531 of the suction and transfer mechanism 53.

In some embodiments, four peeling assemblies 30 are provided, four positioning assemblies 40 are provided, and four first suction cups 523 of the moving mechanism 52 are provided. Two conveying mechanisms 51 are provided and the conveying mechanisms 51 are configured to convey the battery 300 module formed by stacking and serially connecting multiple batteries 300. Two suction and transfer mechanisms 53 are provided, and each suction and transfer mechanism 53 is provided with two second suction cups 532. With this configuration, four insulating covers 200 can be respectively suctioned by the four first suction cups 523 of the moving mechanism 52 at one time, so that the four insulating covers 200 are respectively suctioned to the four peeling assemblies 30 to respectively peel release paper from the four insulating covers 200 via the four peeling assemblies 30. The four insulating covers 200 are then simultaneously moved by the four first suction cups 523 to the four positioning assemblies 40 to respectively position the four insulating covers 200 via the four positioning assemblies 40. Next, two second suction cups 532 of each suction and transfer mechanism 53 suction two insulating covers 200 at one time, so that the insulating cover 200 on one of the second suction cups 532 of one of the suction and transfer mechanisms 53 is attached to the first battery 300 of the battery 300 module on one of the conveying mechanisms 51, and the insulating cover 200 on the other second suction cup 532 of the same suction and transfer mechanism 53 is attached to the first battery 300 of the battery 300 module on the other conveying mechanism 51. Simultaneously, the insulating cover 200 on one of the second suction cups 532 of the other suction and transfer mechanism 53 is attached to the last battery 300 of the battery 300 module on one of the conveying mechanisms 51, and the insulating cover 200 on the other second suction cup 532 of the same suction and transfer mechanism 53 is attached to the last battery 300 of the battery 300 module on the other conveying mechanism 51.

In some embodiments, the two suction and transfer mechanisms 53 may both be disposed between the two conveying mechanisms 51 and the two suction and transfer mechanisms 53 are arranged at intervals along the conveying direction of the conveying mechanisms 51, making the overall structure more compact.

With such a design, at least two insulating covers 200 can be suctioned to the peeling assembly 30 by the moving mechanism 52 at one time, and the release paper on the at least two insulating covers 200 can be peeled off by the peeling assembly 30 at one time, and the at least two insulating covers 200 can be positioned by the positioning assembly 40 at one time, and the at least two insulating covers 200 can be suctioned by the suction and transfer mechanism 53 at one time, so as to attach the at least two insulating covers 200 on the batteries 300 on the at least two conveying mechanisms 51 in sequence, thereby further improving the installation efficiency of the insulating covers 200.

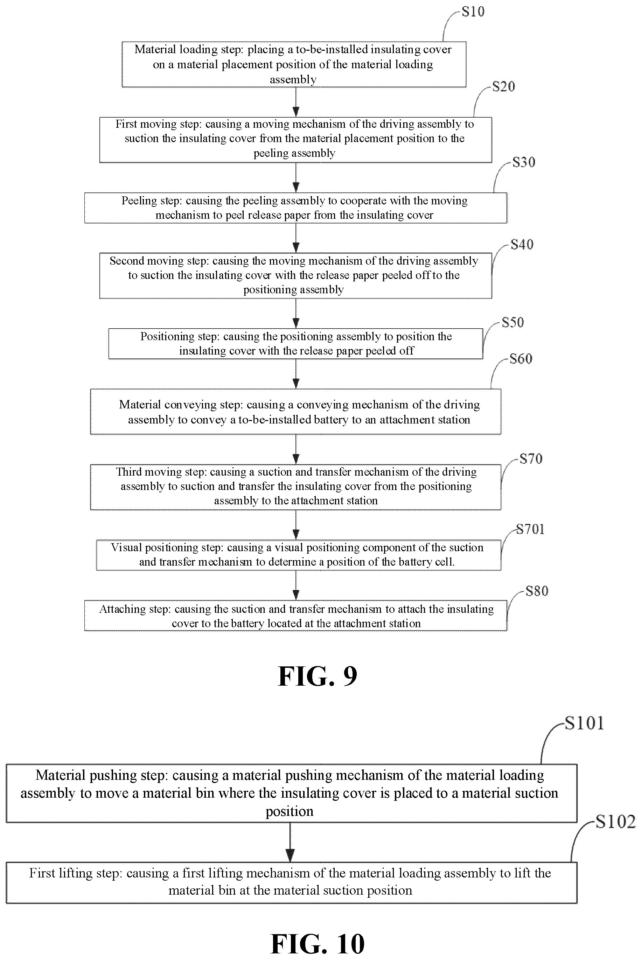

With combined reference to Fig. 9, the present application further proposes a use method of the aforementioned insulating cover installation system 100, where the insulating cover installation system 100 is configured to install an insulating cover 200 on a battery 300, the insulating cover installation system 100 including a machine frame 10, a material loading assembly 20, a peeling assembly 30, a positioning assembly 40, and a driving assembly 50; the use method including:
S10, a material loading step: placing a to-be-installed insulating cover 200 on a material placement position of the material loading assembly 20. Specifically, the to-be-installed insulating cover 200 can be placed on the material placement position manually or mechanically.

During practical applications, one or at least two material placement positions of the material loading assembly 20 can be provided, where each material placement position can hold one or at least two insulating covers 200. In some embodiments, when each material placement position holds at least two insulating covers 200, the at least two insulating covers 200 can be sequentially stacked on the material placement position.

S20, a first moving step: causing a moving mechanism 52 of the driving assembly 50 to suction the insulating cover 200 from the material placement position to the peeling assembly 30.

During practical applications, the moving mechanism 52 can simultaneously suction one or at least two insulating covers 200.

S30, a peeling step: causing the peeling assembly 30 to cooperate with the moving mechanism 52 to peel release paper from the insulating cover 200.

In some embodiments, the peeling assembly 30 includes a clamping cylinder 31 and a clamping jaw 32, the clamping cylinder 31 driving the clamping jaw 32 to clamp the release paper on the insulating cover 200. Thus, when the moving mechanism 52 suctions and moves the insulating cover 200 to the peeling assembly 30, the peeling end of the release paper can extend into the clamping jaw 32. At this time, the clamping cylinder 31 drives the clamping jaw 32 to clamp the release paper on the insulating cover 200. After that, the moving mechanism 52 obliquely pulls the insulating cover 200 to peel the release paper off from the insulating cover 200, thereby achieving automatic peeling of the release paper on the insulating cover 200.

S40, a second moving step: causing the moving mechanism 52 of the driving assembly 50 to suction the insulating cover 200 with the release paper peeled off to the positioning assembly 40.

During practical applications, the suction and transfer mechanism 53 can also simultaneously suction one or at least two insulating covers 200.

S50, a positioning step: causing the positioning assembly 40 to position the insulating cover 200 with the release paper peeled off.

In some embodiments, the positioning assembly 40 includes a positioning plate 41 and at least two first positioning members 42, the positioning plate 41 being configured to carry the insulating cover 200, and the at least two first positioning members 42 being capable of moving toward each other to clamp two opposite short edges of the insulating cover 200. Thus, the moving mechanism 52 can suction the insulating cover 200 onto the positioning plate 41 to carry the insulating cover 200 with the positioning plate 41, and subsequently, the at least two first positioning members 42 move toward each other to clamp two opposite short edges of the insulating cover 200, thereby achieving central positioning of the insulating cover 200 along its length direction.

S60, a material conveying step: causing a conveying mechanism 51 of the driving assembly 50 to convey a to-be-installed battery 300 to an attachment station.

In some embodiments, the conveying mechanism 51 includes a conveying line 511, an unlocking mechanism 512, and a shaping mechanism 513, where the conveying line 511 is disposed on one side of the machine frame 10 and has a tray 5111 for placing the battery 300, the tray 5111 being provided with a pressing block 5112 for pressing the battery 300, where the conveying line 511 is configured to convey the tray 5111 where the battery 300 is placed to the attachment station; the unlocking mechanism 512 is disposed on the machine frame 10 and configured to pull away the pressing block 5112; and the shaping mechanism 513 is disposed on the machine frame 10 and configured to centrally position the battery 300. Thus, the to-be-installed battery 300 is first placed on the tray 5111 of the conveying line 511, so as to convey the tray 5111 where the battery 300 is placed from a material loading end to the attachment station through the conveying line 511; the tray 5111 is then lifted or the conveying line 511 is stopped to temporarily retain the tray 5111 where the battery 300 is placed at the attachment station; subsequently, the pressing block 5112 for pressing the battery 300 is pulled away through the unlocking mechanism 512 to make the battery 300 in an unclamped state on the tray 5111; subsequently, the battery 300 is shaped by the shaping mechanism 513 to centrally position the battery 300, thereby improving the precision of attaching the insulating cover 200 to the battery 300.

S70, a third moving step: causing a suction and transfer mechanism 53 of the driving assembly 50 to suction and transfer the insulating cover 200 from the positioning assembly 40 to the attachment station.

During practical applications, the suction and transfer mechanism 53 can also simultaneously suction one or at least two insulating covers 200 to the attachment station.

S80, an attaching step: causing the suction and transfer mechanism 53 to attach the insulating cover 200 to the battery 300 located at the attachment station.

In some embodiments, the suction and transfer mechanism 53 includes a mechanical arm 531 and a second suction cup 532, the second suction cup 532 being disposed at a free end of the mechanical arm 531, where the mechanical arm 531 drives the second suction cup 532 to move, and the second suction cup 532 is configured to suction and transfer the insulating cover 200 from the positioning assembly 40 to the attachment station. Thus, the second suction cup 532 can be driven to move, flip, move upward or downward, and perform other movements arbitrarily in three-dimensional space under the action of the mechanical arm 531, so that after the second suction cup 532 suctions the insulating cover 200, it can carry the insulating cover 200 to move, flip, move upward or downward, and perform other movements arbitrarily in the three-dimensional space, thereby enabling the insulating cover 200 to be more accurately attached to the battery 300.

Further, the suction and transfer mechanism 53 further includes a roller assembly 533, the roller assembly 533 being disposed at the free end of the mechanical arm 531, where after the second suction cup 532 attaches the insulating cover 200 to the battery 300, the roller assembly 533 is configured to roll the insulating cover 200 to adhere the insulating cover 200 tightly to the battery 300. Thus, after the insulating cover 200 is attached to the battery 300 by the second suction cup 532, the mechanical arm 531 drives the roller assembly 533 to move, so that the roller assembly 533 rolls the insulating cover 200 attached to the battery 300 to cause the insulating cover 200 to be completely adhered to the battery 300, thereby improving the installation effect of the insulating cover 200.

In the technical solutions of the embodiments of the present application, the material loading step is first performed to place an insulating cover 200 at the material placement position of the material bin 21 of the material loading assembly 20 manually or mechanically; subsequently, the first moving step is performed to suction the insulating cover 200 from the material placement position to the peeling assembly 30 by the moving mechanism 52 of the driving assembly 50, followed by the peeling step to enable the peeling assembly 30 to cooperate with the moving mechanism 52 to automatically peel release paper from the insulating cover 200; following this, the second moving step is performed to suction the insulating cover 200 with the release paper peeled off to the positioning assembly 40 by the moving mechanism 52 of the driving assembly 50, followed by the positioning step to allow the positioning assembly 40 to perform secondary precise positioning of the insulating cover 200 with the release paper peeled off; thereafter, the material conveying step is performed to convey a battery 300 to the attachment station by the conveying mechanism 51 of the driving assembly 50; following this, the third moving step is performed to suction and convey the insulating cover 200 from the positioning assembly 40 to the attachment station by the suction and transfer mechanism 53 of the driving assembly 50, followed by the attaching step to enable the suction and transfer mechanism 53 to attach the insulating cover 200 to the battery 300 located at the attachment station, so as to complete installation of the insulating cover 200 to the battery 300. **In** this way, automatic peeling of the release paper from the insulating cover 200 and automatic attachment of the insulating cover 200 are achieved, thereby effectively improving the installation efficiency of the insulating cover 200. Additionally, secondary precise positioning of the insulating cover 200 is achieved, thereby significantly enhancing the installation accuracy of the insulating cover 200.

In addition, by installing all of the material loading assembly 20, the peeling assembly 30, the positioning assembly 40, and the moving mechanism 52 of the driving assembly 50 on the machine frame 10, the overall structure of the insulating cover installation system 100 is made more compact, which can effectively reduce the footprint of the equipment and improve the utilization of the entire space.

In addition, the moving mechanism 52 and the suction and transfer mechanism 53 can operate simultaneously. For example, after the moving mechanism 52 suctions the insulating cover 200 with the release paper peeled off to the positioning assembly 40 for secondary precise positioning, the suction and transfer mechanism 53 suctions and transfers the insulating cover 200 from the positioning assembly 40 to the attachment station. Simultaneously, the moving mechanism 52 suctions the next insulating cover 200 to the peeling assembly 30, enabling the peeling assembly 30 to cooperate with the moving mechanism 52 to automatically peel the release paper from the insulating cover 200. This can further improve the installation efficiency of the insulating cover 200.

In an embodiment of the present application, with combined reference to Fig. 10, before the first moving step, the use method further includes:
S101, a material pushing step: causing a material pushing mechanism of the material loading assembly 20 to move a material bin 21 where the insulating cover 200 is placed to a material suction position.

In some embodiments, the material pushing mechanism may be a linear cylinder so that, under the linear motion of the linear cylinder, the material bin 21 is driven to move to the material suction position, or the material bin 21 is driven to return to the material loading position.

In some other embodiments, the material pushing mechanism may also adopt a structure in which a cylinder cooperates with gears and racks or a structure in which a cylinder cooperates with lead screws and nuts, which is not specifically limited herein.

S102, a first lifting step: causing a first lifting mechanism of the material loading assembly 20 to lift the material bin 21 at the material suction position.

In some embodiments, the first lifting mechanism may be a lifting cylinder to lift the material bin 21 under the linear motion of the lifting cylinder.

In some other embodiments, the first lifting mechanism may also adopt a structure in which a cylinder cooperates with gears and racks or a structure in which a cylinder cooperates with lead screws and nuts, which is not specifically limited herein.

With such a design, the material pushing step is performed to drive the material bin 21 where the insulating cover 200 is placed to move to the material suction position through the material pushing mechanism, so that the movement distance of the moving mechanism 52 can be reduced, making it easier for the moving mechanism 52 to suction the insulating cover 200; following this, the first lifting step is performed to lift the material bin 21 where the insulating cover 200 is placed through the first lifting mechanism, so that the lifting height of the moving mechanism 52 can be reduced, making it more conducive to the moving mechanism 52 capturing the position of the insulating cover 200 so as to smoothly suction the insulating cover 200.

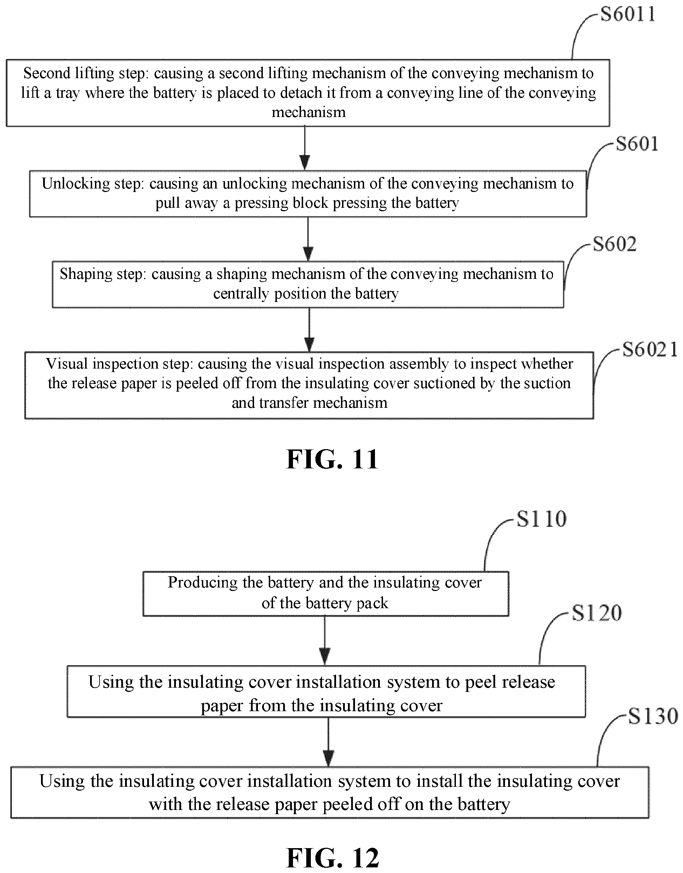

In an embodiment of the present application, with combined reference to Fig. 11, before the third moving step, the use method further includes:
S601, an unlocking step: causing an unlocking mechanism 512 of the conveying mechanism 51 to pull away a pressing block 5112 pressing the battery 300; and
S602, a shaping step: causing a shaping mechanism 513 of the conveying mechanism 51 to centrally position the battery 300.

In some embodiments, the conveying mechanism 51 includes a conveying line 511, an unlocking mechanism 512, and a shaping mechanism 513, where the conveying line 511 is disposed on one side of the machine frame 10 and has a tray 5111 for placing the battery 300, the tray 5111 being provided with a pressing block 5112 for pressing the battery 300, where the conveying line 511 is configured to convey the tray 5111 where the battery 300 is placed to the attachment station; the unlocking mechanism 512 is disposed on the machine frame 10 and configured to pull away the pressing block 5112; and the shaping mechanism 513 is disposed on the machine frame 10 and configured to centrally position the battery 300.

With such a design, the to-be-installed battery 300 is first placed on the tray 5111 of the conveying line 511, so as to convey the tray 5111 where the battery 300 is placed from a material loading end to the attachment station through the conveying line 511; the tray 5111 is then lifted or the conveying line 511 is stopped to temporarily retain the tray 5111 where the battery 300 is placed at the attachment station; subsequently, the unlocking step is performed to pull away the pressing block 5112 for pressing the battery 300 through the unlocking mechanism 512 to make the battery 300 in an unclamped state on the tray 5111; subsequently, the shaping step is performed to shape the battery 300 by the shaping mechanism 513 to centrally position the battery 300, thereby improving the precision of attaching the insulating cover 200 to the battery 300.

In an embodiment of the present application, with combined reference to Fig. 11, before the unlocking step, the use method further includes:
S6011, a second lifting step: causing a second lifting mechanism of the conveying mechanism 51 to lift a tray 5111 where the battery 300 is placed to detach it from a conveying line 511 of the conveying mechanism 51.

In some embodiments, the second lifting mechanism may be a lifting cylinder to lift the tray 5111 under the linear motion of the lifting cylinder.

In some other embodiments, the second lifting mechanism may also adopt a structure in which a cylinder cooperates with gears and racks or a structure in which a cylinder cooperates with lead screws and nuts, which is not specifically limited herein.

With such a design, when the conveying line 511 has conveyed the tray 5111 where the battery 300 is placed to the attachment station, the second lifting step can be performed to lift the tray 5111 where the battery 300 is placed to detach it from the conveying line 511 by the second lifting mechanism, thereby temporarily retaining the tray 5111 where the battery 300 is placed at the attachment station. At this time, steps such as unlocking, shaping, and attaching can be performed on the battery 300 on the tray 5111, and at the same time, the conveying line 511 does not need to be shut down, so that the conveying line 511 can continue to convey the next tray 5111 where a battery 300 is placed, and can also continue to convey the previous battery 300 for which attachment has been completed to the next process, thereby improving work efficiency.

In an embodiment of the present application, with combined reference to Fig. 11, the insulating cover installation system 100 further includes a visual inspection assembly 60, and after the shaping step, the use method further includes:
S6021, a visual inspection step: causing the visual inspection assembly 60 to inspect whether the release paper is peeled off from the insulating cover 200 suctioned by the suction and transfer mechanism 53.

With such a design, the insulating cover 200 at the positioning assembly 40 is first sucked and transferred to the visual inspection assembly 60 by the suction and transfer mechanism 53, and the visual inspection step is performed to inspect through the visual inspection assembly 60 whether the release paper on the insulating cover 200 is completely peeled off. When it is inspected that the release paper on the insulating cover 200 is completely peeled off, the insulating cover 200 is suctioned and transferred to the attachment station by the suction and transfer mechanism 53 and the insulating cover 200 is then attached to the battery 300; while when it is inspected that the release paper on the insulating cover 200 is not completely peeled off, the suction and transfer mechanism 53 is controlled to recycle the insulating cover 200.

In an embodiment of the present application, with combined reference to Fig. 9, before the attaching step, the use method further includes:
S701, a visual positioning step: causing a visual positioning component of the suction and transfer mechanism 53 to determine a position of the battery 300.

In this embodiment, after the visual positioning component 534 captures the position of the battery 300, the position data may be transmitted to the control module so that the mechanical arm 531 may be controlled by the control module to perform positional compensation according to the position of the battery 300.

With such a design, after the battery 300 is shaped by the shaping mechanism 513, the visual positioning step is performed to photograph the battery 300 that requires attachment of an insulating cover 200 by the visual positioning component to determine the position of the battery 300, so that the mechanical arm 531 can perform positional compensation based on the position of the battery 300, thereby enabling the insulating cover 200 to be attached to the battery 300 more accurately.

With combined reference to Fig. 12, the present application further proposes a production method for a battery pack, where the aforementioned insulating cover installation system 100 is used to install the insulating cover 200 of the battery pack on a battery 300, the production method including:
S110: producing the battery 300 and the insulating cover 200 of the battery pack. Specifically, the battery 300 and the insulating cover 200 of the battery pack can be produced using corresponding production equipment, which is existing equipment and will not be described in detail here.
S120: using the insulating cover installation system 100 to peel release paper from the insulating cover 200; and using the suction mechanism of the insulating cover installation system 100 to cooperate with the peeling assembly 30 to peel the release paper from the insulating cover 200.
S130, using the insulating cover installation system 100 to install the insulating cover 200 with the release paper peeled off on the battery 300; and using the suction and transfer mechanism 53 and the conveying assembly of the insulating cover installation system 100 to install the insulating cover 200 with the release paper peeled off on the battery 300, thereby achieving the production of the battery pack.

With such a design, a battery 300 and an insulating cover 200 are first produced through production equipment; the insulating cover 200 is then placed at the material placement position in the material bin 21 of the material loading assembly 20 manually or mechanically; subsequently, the moving mechanism 52 of the driving assembly 50 suctions the insulating cover 200 from the material placement position to the peeling assembly 30, enabling the peeling assembly 30 to cooperate with the moving mechanism 52 to automatically peel release paper from the insulating cover 200; following this, the moving mechanism 52 of the driving assembly 50 suctions the insulating cover 200 with the release paper peeled off to the positioning assembly 40, allowing the positioning assembly 40 to perform secondary precise positioning of the insulating cover 200 with the release paper peeled off; thereafter, the conveying mechanism 51 of the driving assembly 50 conveys a battery 300 to the attachment station; following this, the suction and transfer mechanism 53 of the driving assembly 50 suctions and conveys the insulating cover 200 from the positioning assembly 40 to the attachment station, enabling the suction and transfer mechanism 53 to attach the insulating cover 200 to the battery 300 located at the attachment station, so as to complete installation of the insulating cover 200 onto the battery 300, thereby producing the battery pack. In this way, automatic peeling of the release paper from the insulating cover 200 and automatic attachment of the insulating cover 200 are achieved, thereby effectively improving the installation efficiency of the insulating cover 200. Additionally, secondary precise positioning of the insulating cover 200 is achieved, thereby significantly enhancing the installation accuracy of the insulating cover 200.

The foregoing descriptions are merely some preferred embodiments of the present application, but are not intended to limit the patent scope of the present application. Any equivalent structural transformations or equivalent process transformations made under the application concept of the present application by using the content of the specification and accompanying drawings, or direct/indirect application of the content of the specification and accompanying drawings to other related technical fields should fall within the patent protection scope of the present application.

## Claims

1. An insulating cover installation system for installing an insulating cover on a battery, the insulating cover installation system comprising:
a machine frame;
a material loading assembly disposed on the machine frame and having a material placement position for placing the insulating cover;
a peeling assembly disposed on the machine frame and configured to peel release paper from the insulating cover;
a positioning assembly disposed on the machine frame and configured to position the insulating cover; and
a driving assembly comprising a conveying mechanism, a moving mechanism, and a suction and transfer mechanism, wherein the conveying mechanism is configured to convey the battery to an attachment station; the moving mechanism is configured to suction the insulating cover from the material placement position to the peeling assembly, the peeling assembly is configured to cooperate with the moving mechanism to peel the release paper from the insulating cover, and the moving mechanism is configured to suction the insulating cover with the release paper peeled off to the positioning assembly; and the suction and transfer mechanism is configured to suction and transfer the insulating cover on the positioning assembly to the attachment station to attach the insulating cover to the battery located at the attachment station, wherein
the moving mechanism comprises a first driving member, a second driving member, and a first suction cup, wherein the first driving member is configured to drive the second driving member to move in a horizontal direction, the second driving member is configured to drive the first suction cup to move upward or downward in a vertical direction, and the first suction cup is configured to suction the insulating cover from the material placement position to the peeling assembly and to move the insulating cover with the release paper peeled off to the positioning assembly; and
the moving mechanism further comprises an air-blowing block, the air-blowing block being disposed laterally to the first suction cup, wherein an air-blowing port of the air-blowing block blows air obliquely downward and is oriented toward a suction surface of the first suction cup.

2. The insulating cover installation system of claim 1, wherein the material loading assembly comprises a material bin and a material pushing mechanism, the material bin having the material placement position, and the material pushing mechanism being configured to drive the material bin where the insulating cover is placed to move to a material suction position.

3. The insulating cover installation system of claim 2, wherein the material loading assembly further comprises a first lifting mechanism, the first lifting mechanism being disposed below the material bin and configured to lift the material bin at the material suction position.

4. The insulating cover installation system of claim 2, wherein the material bin is drawably disposed on the machine frame;
and/or, at least two layers of material bins are provided, the at least two layers of material bins being arranged at intervals along the vertical direction.

5. The insulating cover installation system of claim 1, wherein the peeling assembly comprises a clamping cylinder and a clamping jaw, the clamping cylinder driving the clamping jaw to clamp the release paper on the insulating cover.

6. The insulating cover installation system of claim 5, wherein a clamping surface of the clamping jaw is serrated.

7. The insulating cover installation system of claim 5, wherein the peeling assembly further comprises a recycling line, the recycling line being located below the clamping jaw, wherein the recycling line is configured to recycle the peeled-off release paper.

8. The insulating cover installation system of claim 1, wherein the positioning assembly comprises a positioning plate and at least two first positioning members, the positioning plate being configured to carry the insulating cover, and the at least two first positioning members being capable of moving toward each other to clamp two opposite short edges of the insulating cover.

9. The insulating cover installation system of claim 8, wherein one of long edges of the positioning plate is provided with a reference surface, and the positioning assembly further comprises a second positioning member, the second positioning member being located on one side of the reference surface, wherein the second positioning member is capable of moving toward the reference surface and configured to press a folded edge of the insulating cover against the reference surface.

10. The insulating cover installation system of any one of claims 1 to 9, wherein the conveying mechanism comprises:
a conveying line disposed on one side of the machine frame and having a tray for placing the battery, the tray being provided with a pressing block for pressing the battery, wherein the conveying line is configured to convey the tray where the battery is placed to the attachment station;
an unlocking mechanism disposed on the machine frame and configured to pull away the pressing block; and
a shaping mechanism disposed on the machine frame and configured to centrally position the battery.

11. The insulating cover installation system of claim 10, wherein the shaping mechanism comprises:
a clamping mechanism disposed above the conveying line, the clamping mechanism comprising at least two clamping members, wherein the at least two clamping members are capable of moving toward each other to clamp two opposite sides of the battery to centrally clamp the battery; and
a pressing-down mechanism disposed above the conveying line, the pressing-down mechanism comprising a pressing-down member, wherein the pressing-down member is capable of moving down to press the battery.

12. The insulating cover installation system of claim 10, wherein the conveying mechanism further comprises a second lifting mechanism, the second lifting mechanism being disposed below the conveying line and configured to lift the tray where the battery is placed to detach it from the conveying line.

13. The insulating cover installation system of any one of claims 1 to 9, wherein the suction and transfer mechanism comprises a mechanical arm and a second suction cup, the second suction cup being disposed at a free end of the mechanical arm, wherein the mechanical arm drives the second suction cup to move, and the second suction cup is configured to suction and transfer the insulating cover from the positioning assembly to the attachment station.

14. The insulating cover installation system of claim 13, wherein the suction and transfer mechanism further comprises a visual positioning component, the visual positioning component having an imaging port oriented toward the battery and being configured to determine a position of the battery.

15. The insulating cover installation system of claim 13, wherein the suction and transfer mechanism further comprises a roller assembly, the roller assembly being disposed at the free end of the mechanical arm, wherein after the second suction cup attaches the insulating cover to the battery, the roller assembly is configured to roll the insulating cover to adhere the insulating cover tightly to the battery.

16. The insulating cover installation system of any one of claims 1 to 9, further comprising:
a visual inspection assembly disposed on the machine frame, wherein the visual inspection assembly is configured to inspect whether the release paper is peeled off from the insulating cover suctioned by the suction and transfer mechanism.

17. The insulating cover installation system of any one of claims 1 to 9, wherein at least two peeling assemblies are provided, the at least two peeling assemblies being arranged at intervals along a conveying direction of the conveying mechanism;
at least two positioning assemblies are provided, the at least two positioning assemblies being arranged at intervals along the conveying direction of the conveying mechanism;
at least two first suction cups of the moving mechanism are provided, the at least two first suction cups being arranged at intervals along the conveying direction of the conveying mechanism;
at least two conveying mechanisms are provided, the at least two conveying mechanisms being arranged side by side;
at least two suction and transfer mechanisms are provided, the at least two suction and transfer mechanisms being arranged side by side; and
at least two second suction cups of the suction and transfer mechanism are provided, the at least two second suction cups being arranged at intervals on a mechanical arm of the suction and transfer mechanism.

18. A use method of the insulating cover installation system of any one of claims 1 to 17, wherein the insulating cover installation system is configured to install an insulating cover on a battery, the insulating cover installation system comprising a machine frame, a material loading assembly, a peeling assembly, a positioning assembly, and a driving assembly; the use method comprising:
a material loading step: placing a to-be-installed insulating cover on a material placement position of the material loading assembly;
a first moving step: causing a moving mechanism of the driving assembly to suction the insulating cover from the material placement position to the peeling assembly;
a peeling step: causing the peeling assembly to cooperate with the moving mechanism to peel release paper from the insulating cover;
a second moving step: causing the moving mechanism of the driving assembly to suction the insulating cover with the release paper peeled off to the positioning assembly;
a positioning step: causing the positioning assembly to position the insulating cover with the release paper peeled off;
a material conveying step: causing a conveying mechanism of the driving assembly to convey a to-be-installed battery to an attachment station;
a third moving step: causing a suction and transfer mechanism of the driving assembly to suction and transfer the insulating cover from the positioning assembly to the attachment station; and
an attaching step: causing the suction and transfer mechanism to attach the insulating cover to the battery located at the attachment station.

19. The use method of claim 18, wherein before the first moving step, the use method further comprises:
a material pushing step: causing a material pushing mechanism of the material loading assembly to move a material bin where the insulating cover is placed to a material suction position; and
a first lifting step: causing a first lifting mechanism of the material loading assembly to lift the material bin at the material suction position.

20. The use method of claim 18, wherein before the third moving step, the use method further comprises:
an unlocking step: causing an unlocking mechanism of the conveying mechanism to pull away a pressing block pressing the battery; and
a shaping step: causing a shaping mechanism of the conveying mechanism to centrally position the battery.

21. The use method of claim 20, wherein before the unlocking step, the use method further comprises:
a second lifting step: causing a second lifting mechanism of the conveying mechanism to lift a tray where the battery is placed to detach it from a conveying line of the conveying mechanism.

22. The use method of claim 20, wherein the insulating cover installation system further comprises a visual inspection assembly, and after the shaping step, the method further comprises:
a visual inspection step: causing the visual inspection assembly to inspect whether the release paper is peeled off from the insulating cover suctioned by the suction and transfer mechanism.

23. The use method of any one of claims 18 to 22, wherein before the attaching step, the use method further comprises:
a visual positioning step: causing a visual positioning component of the suction and transfer mechanism to determine a position of the battery.

24. A production method for a battery pack, wherein the insulating cover installation system of any one of claims 1 to 17 is used to install an insulating cover of the battery pack on a battery, the production method comprising:
producing the battery and the insulating cover of the battery pack;
using the insulating cover installation system to peel release paper from the insulating cover; and
using the insulating cover installation system to install the insulating cover with the release paper peeled off on the battery.
